# EUROPÄISCHE PATENTSCHRIFT

(11) **EP 2 662 194 B1**
(45) Veröffentlichungstag und Bekanntmachung des Hinweises auf die Patenterteilung: **14.08.2019**
(21) Anmeldenummer: 13001902.9
(22) Anmeldetag: 12.04.2013
(51) Int. Cl.: B29C 45/27, B29C 45/28

(54) **Antrieb zur Verstellung der Nadel einer Nadelventildüse in Heißkanalsystemen für Spritzgießanlagen mit einer Kühlvorrichtung für den Antrieb**
Drive for adjustment of a needle of a needle valve nozzle in hot runner systems for injection molding machines with a cooling device for the drive
Actionneur de déplacement de l'aiguille d'une buse de soupape à aiguille dans des systèmes de canal chaud pour des installations de moulage par injection avec dispositif de refroidissement pour cette actionneur

(30) Priorität: 11.05.2012 DE 102012009412
(43) Veröffentlichungstag der Anmeldung: 13.11.2013
(73) Patentinhaber: INCOE INTERNATIONAL, INC., D-63322 Rödermark (DE)
(72) Erfinder: Jörg, Anton, 63762 Großostheim (DE)
(74) Vertreter: 2K Patentanwälte Blasberg Kewitz & Reichel

(56) Entgegenhaltungen:
- WO-A1-2011/119791
- DE-A1-102009 024 271
- DE-T2- 60 111 011
- JP-A- 2006 137 163
- US-A- 4 747 770
- US-A1- 2004 115 295
- US-A1- 2008 258 342

## Beschreibung

Die vorliegende Erfindung bezieht sich auf einen Antrieb zur Verstellung der Nadel einer Nadelventildüse in Heißkanalsystemen für Spritzgießanlagen mit einer Kühlvorrichtung für den Antrieb gemäß dem Oberbegriff des Anspruches 1.

Zu einem Heißkanalsystem für eine Spritzgießanlage gehören ein Heißkanal-Verteiler mit einer Angussbuchse für die Schmelze, an den Heißkanal-Verteiler angeschlossene Düsen zum Einführen in das Spritzgießwerkzeug und, im Falle von Nadelventildüsen, Antriebe für die Verstellung der Ventilnadeln in ihrer Längsrichtung.

Der Antrieb für die Verstellung der Nadel ist auf dem Heißkanal-Verteiler angeordnet. Der Antrieb kann beispielsweise ein hydraulischer, ein pneumatischer, ein elektrischer oder ein magnetischer Antrieb sein. Es ist wichtig, dass der Antrieb bzw. sein Gehäuse gegenüber der von dem Heißkanal-Verteiler ausstrahlenden Hitze geschützt wird.

Zu diesem Zweck ist es bereits bekannt, im unteren, dem Verteiler zugewandten Teil des Antriebsgehäuses eine Kühlvorrichtung einzubauen. Diese Anordnung hat den Nachteil, dass beim Auswechseln des Antriebs auch die Anschlüsse für das die Kühlvorrichtung durchfliessende Kühlmittel gelöst werden müssen. Dies erfordert nicht nur zusätzliche zeit, sondern verursacht auch das Auslaufen einer begrenzten Kühlmittelmenge.

Aus der DE 60111011 ist bereits ein Antrieb gemäss dem Oberbegriff des Anspruches 1 bekannt, bei dem sich die Kühlvorrichtung nicht im Antriebsgehäuse befindet, sondern als separate Kühlplatte unter dem Antriebsgehäuse angeordnet ist. Diese Kühlplatte dient in erster Linie dazu, eine zylindrische Dichtungsbüchse zu kühlen, welche das Emporsteigen von Schmelze aus dem Schmelzekanal verhindern soll. Zu diesem Zweck ist die Büchse so lang ausgebildet, dass sie in die Kühlplatte hineinreicht und an dieser eng anliegt. Dadurch wird eine gute Kühlung der Dichtungsbüchse erreicht. Die Kühlplatte ist dabei fest zwischen dem Antriebsgehäuse und dem Verteiler eingespannt und dient als Tragplatte für das Antriebsgehäuse.

Eine Kühlvorrichtung für einen Antrieb zur Verstellung der Nadel einer Nadelventildüse mit einem separat ausgebildeten Kühlkörper ist auch bereits aus der DE 102009024271 bekannt. Bei dem Antrieb dieser Druckschrift geht es darum, eine vertikale Verschiebarkeit der Antriebsanordnung mitsamt der Ventilnadel relativ zum Heißkanal-Verteiler der Spritzgießanlage zu erreichen. Der Kühlkörper wird bei dieser Antriebsanordnung durch Federn sehr stark zusammen gepresst, so das er sehr stabil ausgebildet sein muss.

Aus der japanische Druckschrift JP 2006137163 A ist eine Spritzgießanlage bekannt, bei der der Kolben-Zylinderantrieb für das Nadelventil unterhalb des Heißkanal-Verteilerblocks und der Kavität angeordnet ist. Dabei ist zwischen dem Kolben-Zylinderantrieb und dem Heißkanal-Verteilerblock eine Kühlplatte angeordnet. Bei dieser Anordnung nimmt aus Gründen der Schwerkraft die Kühlplatte nicht das Gewicht des Kolben-Zylinderantriebs auf, sondern umgekehrt lastet die Kühlplatte auf der Kolben-Zylinderantrieb.

Der vorliegenden Erfindung liegt die Aufgabe zugrunde, einen Antrieb der oben genannten Art zu entwickeln, bei dem der Kühlkörper ausschliesslich der Abschirmung des Antriebsgehäuses gegen die Hitze vom Heißkanal-Verteiler dient, der ferner mechanisch kaum belastet ist und der einen einfachen Aus- und Einbau des Antriebsgehäuse mit dem Antrieb ermöglicht, wobei ein Abschrauben der Kühlmittelanchlüsse nicht erforderlich ist.

Zur Lösung dieser Aufgabe wird ein Antrieb nach dem Oberbegriff des Anspruches 1 vorgeschlagen, der erfindungsgemäss die im kennzeichnenden Teil des Anspruches 1 genannten Merkmale hat.

Weitere Ausgestaltungen der Erfindung sind in den Unteransprüchen genannt.

Anhand der Figuren soll die Erfindung näher erläutert werden:
- Figur 1: zeigt ein prinzipielles Ausführungsbeispiel der Erfindung zur Erläuterung des generellen Aufbaus des Antriebs und der Wirkungsweise seiner erfindungsgemäßen Kühlvorrichtung,
- Figuren 2: zeigt im vergrößerten Maßstab ein Details der Figur 1.

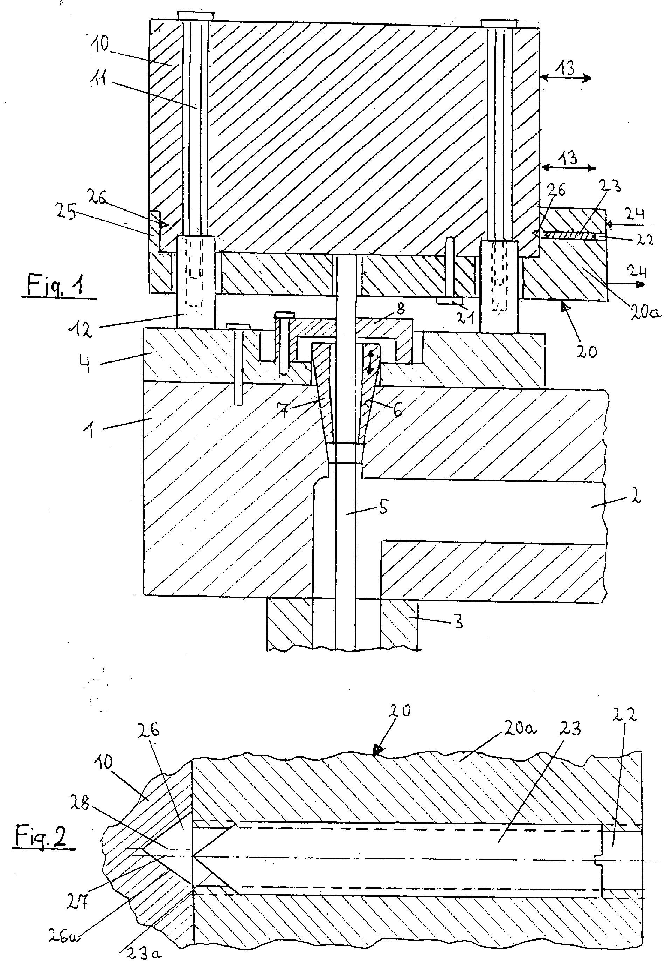

Figur 1 zeigt den grundsätzlichen Aufbau eines Antriebs gemäß der Erfindung. In Figur 1 bezeichnet 1 eines Teil des Heißkanal-Verteilers eines Heißkanalsystems, 2 den Schmelzekanal in diesem Teil des Heißkanal-Verteilers und 3 eine an den Heißkanal-Verteiler angeschlossene Nadelventildüse, welche in ein nicht dargestellte Werkzeug eingeführt wird. Auf dem Heißkanal-Verteiler 1 ist eine Dichtbuchsenscheibe 4 mit einem Durchbruch für die Nadelventiltange 5 befestigt. Der Durchbruch 6 im Heißkanal-Verteiler 4 für die Nadelventilstange 5 ist in seinem oberen Teil konisch ausgebildet. In diese konische Öffnung ragt eine

Dichtungsbüchse 7, die in ihrem oberen Teil zylindrisch und in ihrem unteren Teil konisch ist. Mit dem zylindrischen Teil ist die Büchse 7 in die Dichtbuchsenscheibe 4 einschraubbar und somit im Sinne der Zeichnung in Längsrichtung verschiebbar. Auf diese Weise kann der Spalt zwischen der Büchse 7 und der Nadelventilstange 5 hinreichend klein eingestellt werden, so dass fast keine Schmelze nach oben durchlecken kann. Der obere Teil der Büchse 7 ist durch eine die Nadelventilstange 5 eng umgebende Leckagekappe 8 abgedeckt, die an der Dichtbuchsenscheibe 4 befestigt ist.

Das Antriebsgehäuse 10, in welchem sich der Antrieb für die Ventilnadel 5 befindet, ist in Figur 1 der Übersichtlichkeit halber als massiver Körper dargestellt. Das Antriebsgehäuse 10 ist mittels durchgehender Schrauben 11 mit Stützen 12 verschraubt, bei denen es sich um integrale Teile der Dichtbuchsenscheibe 4 oder der Heißkanal-Verteilers handeln kann oder die in anderer Weise an der Dichtbuchsenscheibe oder dem Heißkanal-Verteiler befestigt sind. Mit den Pfeilen 13 wird bei Verwendung eines hydraulischen Antriebs die wechselnde Zuführung und Abführung des Druckmittels, zum Beispiel Öl, zu den Kammern des hydraulischen Anriebszylinders angedeutet.

Im wesentlichen unterhalb des Antriebsgehäuses 10 ist ein Kühlkörper 20 am Antriebsgehäuse befestigt. Dies kann beispielsweise durch von unten eingesetzte Schrauben 21 geschehen.

Der Kühlkörper kann als ebene Platte ausgebildet sein. Er kann aber auch, wie das Ausführungsbeispiel gemäß Figur 1 zeigt, mit einem zusätzlichen seitlichen Abschnitt 20a versehen sein. Es ist auch möglich, lediglich Kühlkanäle in dem genannten seitlichen Abschnitt 20a vorzusehen, wobei in diesem Falle der unter dem Antriebsgehäuse 10 liegende Teil der Kühlkörpers vorzugsweise massiv ausgebildet ist.

Der Aus- und Einbau des Antriebsgehäuses gestaltet sich besonders einfach, wenn statt der von unten eingesetzten Schrauben 21 eine oder mehrere Schrauben von der leichter zugänglichen Seite des Antriebs eingesetzt wird/werden, wobei die Schrauben in Gewindelöcher des Antriebsgehäuse greifen.

Eine andere besonders vorteilhafte Befestigung des Kühlkörper am Antriebsgehäuse besteht darin, in dem seitlichen Teil 20a des Kühlkörpers eine Gewindebohrung 22 vorzusehen, und in diese eine Schraube oder einen Gewindestift (Madenschraube) 23 einzuschrauben, deren vorderes Ende in eine Ringnut 26 am Antriebsgehäuse 10 eingreift (siehe Figur 2). In diesem Falle ist eine Fixierung des Antriebsgehäuses 10 in seitlicher Richtung relativ zum Kühlkörper 20 erforderlich, was in Figur 1 durch den überstehenden sich ringförmig erstreckenden Wulst 25 erreicht wird. Ausreichend wäre aber auch beispielsweise ein Positionierstift.

Durch die Verwendung eines Gewindestiftes 23 wird die Anbringung der Anschlüsse für den Zu- und Abfluss des Kühlmittels für den Kühlkörper, die in Figur 1 nur durch die Pfeile 24 angedeutet sind, kaum in räumlicher Hinsicht behindert.

Gemäß der Erfindung können die Ringnut 26 und die Gewindebohrung 22 räumlich so zueinander positioniert sein, dass die Längsachse 27 (siehe Figur 2) der Gewindebohrung im Sinne der Zeichnung etwas tiefer als die Mittellinie 28 der Ringnut 26 liegt. Dadurch wird erreicht, dass beim Auftreffen der Flanke 23a der/des Schraube/Gewindestiftes 23 auf die Flanke 26a der Ringnut 26 der Kühlkörper 20 fest gegen das Antriebsgehäuse 10 gezogen wird, was eine gute Kühlung des Antriebsgehäuses gewährleistet.

Die Form der Spitze der/des Schraube/Gewindestiftes 23 einerseits und des Querschnitts Ringnut 26 andererseits ist, wie in Figur 2 gezeigt ist, vorzugsweise kegel- oder kegelstumpfförmig ausgebildet. Aber auch kurvige Formen können den gleichen Effekt bewirken.

Anstelle einer Ringnut 26 würde auch ein entsprechend positioniertes Sackloch genügen. Die Ringnut hat aber den Vorteil, dass die Lage des Kühlkörpers grundsätzlich horizontal um 360 Grad relativ zum Antriebsgehäuse 10 gedreht werden kann. Auf diese Weise kann die in räumlicher Hinsicht beste Lage für die raumfordernden Anschlüsse für das Kühlmittel gewählt werden.

Wie man aus der Figur 1 erkennt, umgibt der Kühlkörper 20 mit Spiel die aus der Schraube 11 und der Stütze 12 bestehende Befestigungsverbindung des Antriebsgehäuses 10 mit der Dichtungsscheibe 4 beziehungsweise dem Heißkanal-Verteiler 1. Das bedeutet, dass der Kühlkörper 20 weder als Tragplatte für das Antriebsgehäuse 10 dient, noch durch die Verspannkräfte des Antriebsgehäuses 10 mit der Dichtungsscheibe 4 beziehungsweise dem Heißkanal-Verteiler 1 mechanisch belastet wird. Die Kühlvorrichtung des Antriebs gemäß der Erfindung ist praktisch belastungsfrei unter dem Antriebsgehäuse 10 angehängt. Der Kühlkörper kann somit großzügig mit Kanälen für das Kühlmittel versehen werden, ohne das auf Mindestwandstärken und mechanische Belastbarkeit des Kühlkörpers nennenswert Rücksicht genommen werden muss.

## Patentansprüche

1. Antrieb zur Verstellung der Nadel (5) einer Nadelventildüse (3) in Heißkanalsystemen für Spritzgießanlagen mit einer Kühlvorrichtung für den Antrieb, wobei der Antrieb auf dem Heißkanal-Verteiler (1) der Spritzgießanlage angeordnet ist und wobei das Antriebsgehäuse (10), in welchem der Antrieb untergebracht ist, an seiner dem Heißkanal-Verteiler (1) zugewandten Seite mit einem als separates Teil ausgebildeten Kühlkörper (20) der Kühlvorrichtung verbunden ist, **dadurch gekennzeichnet, dass** der Kühlkörper (20) der Kühlvorrichtung weder durch die Verspannkräfte des Antriebsgehäuses (10) mit dem Heißkanal-Verteiler (1) und in seiner Anordnung mit dem Antriebsgehäuses (10) auf dem Heißkanal-Verteiler (1) auch nicht durch das Gewicht des Antriebsgehäuses (10) belastet wird.

2. Antrieb nach Anspruch 1, **dadurch ge kennzeichnet**, dass der Kühlkörper (20) mit durchgehenden Löchern versehen ist, durch die sich mit dem Heißkanal-Verteiler (1) direkt oder indirekt verbundene Stützen (12) frei erstrecken, auf denen das Antriebsgehäuse (10) befestigt ist.

3. Antrieb nach Anspruch 1 oder 2, **dadurch gekennzeichnet, dass** die Stützen (12) mit Innengewinde versehen sind, in die das Antriebsgehäuse (10) fixierende Schrauben (11) einschraubbar sind.

4. Antrieb nach Anspruch 2 oder 3, **dadurch gekennzeichnet, dass** auf dem Heißkanal-Verteiler (1) eine Dichtbuchsenscheibe (4) befestigt ist, auf der die Stützen (12) angebracht sind.

5. Antrieb nach einem der vorhergehenden Ansprüche, **dadurch gekennzeichnet, dass** der Kühlkörper (20) mittels einer oder mehrerer Schrauben (21) an der Unterseite des Antriebsgehäuses (10) befestigt ist.

6. Antrieb nach einem der vorhergehenden Ansprüche, **dadurch gekennzeichnet, dass** der Kühlkörper (20) einen zusätzlichen seitlich am Antriebsgehäuse (10) anliegenden Abschnitt (20a) aufweist, über den der Kühlkörper (20) mit dem Antriebsgehäuse verschraubt werden kann.

7. Antrieb nach einem der Ansprüche 1 bis 5, **dadurch gekennzeichnet, dass** der Kühlkörper (20) einen zusätzlichen seitlich am Antriebsgehäuse (10) anliegenden Abschnitt (20a) aufweist, der mit einer zum Antriebsgehäuse (10) führenden Gewindebohrung (22) versehen ist, und dass in Verlängerung der Gewindebohrung (22) das Antriebsgehäuse (10) eine Ringnut (26) aufweist, in die eine in die Gewindebohrung (22) eingeführte Schraube (23) hineinragt.

8. Antrieb nach Anspruch 7, **dadurch ge kennzeichnet**, dass die genannte Schraube ein Gewindestift (Madenschraube) (23) ist.

9. Antrieb nach einem der vorhergehenden Ansprüche, **dadurch gekennzeichnet, dass** das Antriebsgehäuse (10) gegen eine seitliche Verschiebung durch die/den Schraube/Gewindestift (23) gesichert ist, beispielsweise durch einen ringförmigen Wust (25) am Kühlkörper oder einen Positionierstift.

10. Antrieb nach einem der Ansprüche 7 bis 9, **dadurch gekennzeichnet, dass** die Spitze der/des Schraube/Gewindestiftes und der Querschnitt der Ringnut (26) kegel- oder kegelstumpfförmig ausgebildet ist.

11. Antrieb nach einem der Ansprüche 7 bis 10, **dadurch gekennzeichnet, dass** die Längsachse (26) der/des Schraube/Gewindestiftes gegenüber der Mittellinie (28) der Ringnut (26) in Richtung zum Heißkanal-Verteiler (1) geringfügig versetzt ist.

## Claims

1. Drive for adjusting the needle (5) of a needle valve nozzle (3) in hot runner systems for injection moulding systems with a cooling device for the drive, wherein the drive is arranged on the hot runner distributor (1) of the injection moulding system and wherein the drive housing (10), in which the drive is accommodated, is connected on its side facing the hot runner distributor (1) to a cooling body (20) of the cooling device constructed as a separate part, **characterized in that** the heat sink (20) of the cooling device is neither loaded by the clamping forces of the drive housing (10) with the hot-runner distributor (1) and in its arrangement with the drive housing (10) on the hot-runner distributor (1) nor by the weight of the drive housing (10).

2. Drive according to claim 1, **characterized in that** the heat sink (20) is provided with through holes through which supports (12) connected directly or indirectly to the hot runner distributor (1) extend freely, on the supports the drive housing (10) is fastened.

3. Drive according to claim 1 or 2, **characterized in that** the supports (12) are provided with internal threads into which screws (11) fixing the drive housing (10) can be screwed.

4. Drive according to claim 2 or 3, **characterized in that** a sealing bush disc (4), on which the supports (12) are mounted, is fastened to the hot runner distributor (1).

5. Drive according to one of the preceding claims, **characterized in that** the heat sink (20) is fastened to the underside of the drive housing (10) by means of one or more screws (21).

6. Drive according to one of the previous claims, **characterized in that** the heat sink (20) has an additional cut (20a) which bears laterally against the drive housing (10) and via which the heat sink (20) can be screwed to the drive housing.

7. Drive according to one of the claims 1 to 5, **characterized in that** the heat sink (20) has an additional section (20a) which bears laterally against the drive housing (10) and is provided with a threaded bore (22) leading to the drive housing (10), and **in that**, in extension of the threaded bore (22), the drive housing (10) has an annular groove (26) into which a screw (23) inserted into the threaded bore (22) projects.

8. Drive according to claim 7, **characterised in that** said screw is a threaded pin (grub screw) (23).

9. Drive according to one of the preceding claims, **characterized in that** the drive housing (10) is secured against lateral displacement by the screw/ threaded pin(s) (23), for example by an annular bulge (25) on the heat sink or a positioning pin.

10. Actuator according to one of claims 7 to 9, **characterized in that** the tip of the screw/threaded spindle and the cross-section of the annular groove (26) are conical or frustoconical.

11. Drive according to one of claims 7 to 10, **characterized in that** the longitudinal axis (26) of the screw /threaded pin is slightly offset with respect to the centre line (28) of the annular groove (26) in the direction of the hot runner distributor (1).

## Revendications

1. Actionneur pour le réglage de l'aiguille (5) d'une buse de soupape à aiguille (3) dans des systèmes de canal chaud pour des installations de moulage par injection comportant un dispositif de refroidissement pour l'actionneur, l'actionneur étant disposé sur le distributeur à canal chaud (1) de l'installation de moulage par injection, et le boîtier d'actionneur (10), dans lequel l'actionneur est logé, étant relié sur son côté tourné vers le distributeur à canal chaud (1) avec un dissipateur de chaleur (20) du dispositif de refroidissement conçu sous la forme d'une partie séparée, **caractérisé par le fait que** le dissipateur de chaleur (20) du dispositif de refroidissement n'est chargé ni par les forces de serrage du boîtier d'actionneur (10) avec le distributeur à canal chaud (1) et dans son agencement avec le boîtier d'actionneur (10) sur le distributeur à canal chaud (1), ni par le poids du boîtier d'actionneur (10).

2. Actionneur selon la revendication 1, **caractérisé par le fait que** le dissipateur de chaleur (20) comporte des trous traversants à travers lesquels des supports (12), reliés directement ou indirectement au distributeur à canal chaud (1), s'étendent librement, supports sur lesquels le boîtier d'actionneur (10) est fixé.

3. Actionneur selon l'une des revendications 1 ou 2, **caractérisé par le fait que** les supports (12) comportent des filetages internes dans lesquels des vis (11) fixant le boîtier d'actionneur (10) sont aptes à être vissées.

4. Actionneur selon l'une des revendications 2 ou 3, **caractérisé par le fait que**, sur le distributeur à canal chaud (1), est fixé un disque de bague d'étanchéité (4), sur lequel les supports (12) sont montés,

5. Actionneur selon l'une des revendications précédentes, **caractérisé par le fait que** le dissipateur de chaleur (20) est fixé sur le côté inférieur du boîtier d'actionneur (10) au moyen d'une ou plusieurs vis (21).

6. Actionneur selon l'une des revendications précédentes, **caractérisé par le fait que** le dissipateur de chaleur (20) présente une section supplémentaire (20a) qui est latéralement en appui contre le boîtier d'actionneur (10), par l'intermédiaire de laquelle le dissipateur de chaleur (20) peut être vissé au boîtier d'actionneur.

7. Actionneur selon l'une des revendications 1 à 5, **caractérisé par le fait que** le dissipateur de chaleur (20) présente une section supplémentaire (20a) qui est latéralement en appui contre le boîtier d'actionneur (10), laquelle comporte un alésage fileté (22) menant au boîtier d'actionneur (10), et **par le fait que**, dans le prolongement de l'alésage fileté (22), le boîtier d'actionneur (10) présente une rainure annulaire (26) dans laquelle une vis (23) introduite dans l'alésage fileté (22) fait saillie.

8. Actionneur selon la revendication 7, **caractérisé par le fait que** ladite vis est une broche filetée (vis sans tête) (23).

9. Actionneur selon l'une des revendications précédentes, **caractérisé par le fait que** le boîtier d'actionneur (10) est assuré contre un déplacement latéral par la vis/broche filetée (23), par exemple par un renflement annulaire (25) sur le dissipateur de chaleur ou une broche de positionnement.

10. Actionneur selon l'une des revendications 7 à 9, **caractérisé par le fait que** la pointe de la vis/broche filetée et la section transversale de la rainure annulaire (26) sont réalisées de forme conique ou tronconique.

11. Actionneur selon l'une des revendications 7 à 10, **caractérisé par le fait que** l'axe longitudinal (26) de la vis/broche filetée est légèrement décalé par rapport à la ligne centrale (28) de la rainure annulaire (26) dans la direction du distributeur à canal chaud (1).
